# FASCICULE DE BREVET EUROPEEN

(11) **EP 2 384 731 B1**
(45) Date de publication et mention de la délivrance du brevet: **21.11.2012**
(21) Numéro de dépôt: 11164697.2
(22) Date de dépôt: 04.05.2011
(51) Int. Cl.: A61G 12/00, A47B 21/00, G06F 1/20

(54) **Chariot de soins médicalisé**
Wagen für die medizinische Behandlung
Hospital treatment cart

(30) Priorité: 07.05.2010 FR 1053571
(43) Date de publication de la demande: 09.11.2011
(73) Titulaire: Decide Life International SA, 1220 Carouge (CH)
(72) Inventeur: Inderbitzin, Patrick, 1955, Chamoson (CH)
(74) Mandataire: Bugnion Genève

(56) Documents cités:
- US-A- 5 702 115
- US-A1- 2002 063 072
- US-A1- 2007 078 562

## Description

La présente invention concerne un chariot informatisé pour soins médicalisés d'après la revendication 1.

### Etat de la technique

On connaît dans l'état de la technique le principe général d'un chariot mobile pour la distribution de médicaments, de soins et du dossier médical du patient dans un hôpital. On connaît en particulier des chariots équipés d'un ordinateur portable pour consulter un dossier numérique du patient.

En particulier, on connaît la demande de brevet internationale WO 2008/025901 décrivant un ensemble mobile connectable, multimédia et multiservices pour le diagnostic et le suivi médical. Cet ensemble se compose d'une base roulante directionnelle et d'un corps creux cylindrique renfermant des moyens d'alimentation électrique, des moyens d'identification, des moyens informatiques et des moyens de communication multimédias ainsi qu'un poste de désinfection des mains et en ce qu'il est prédisposé pour sa réception et son branchement à une station d'accueil. Cette solution intéresse notamment les fabricants de chariots destinés à des hôpitaux et à des unités de soins.

On connaît aussi le brevet américain US 5702115 décrivant un chariot de service pour faciliter le soin des patients. Le chariot comprend un cadre, des roues montées sur le cadre, et plusieurs panneaux latéraux montés sur le cadre pour former deux supports verticaux espacés. Au moins une étagère est montée entre les organes de support. L'étagère est extensible de chaque côté du chariot selon deux directions. Un tiroir extensible selon deux directions est monté au-dessus des étagères. La console comprend également un équipement informatique. Des dispositifs de communication, tels qu'une carte électronique de radiocommunication bidirectionnelle est prévue sur le chariot pour la communication avec un serveur distant.

On connaît encore la demande de brevet américain US 2002013640 décrivant une station de distribution de médicaments informatisée destinée notamment à la gestion de médication d'anesthésie. Les médications, narcotique et non-narcotique, et les approvisionnements pour l'usage dans l'anesthésie, sont rangés dans des récipients fixés sur la station mobile. Un ordinateur logé dans la station est destiné à enregistrer les articles d'anesthésie qui ont été utilisés et assurer la traçabilité de l'utilisation des produits narcotiques notamment.

### Inconvénients de l'art antérieur

Les chariots mobiles de l'art antérieur présentent plusieurs inconvénients.

En premier lieu, les chariots mobiles posent un problème d'autonomie. Certains chariots nécessitent un branchement sur le secteur, ce qui oblige à des manipulations chaque fois que les équipements électriques du chariot doivent être utilisés, et le risque de déconnection par inadvertance.

Les chariots utilisant des batteries d'alimentation ne permettent pas d'atteindre une autonomie satisfaisante et généralement nécessitent une recharge avant la fin d'une journée d'utilisation et dont la durée de vie est beaucoup trop courte.

En second lieu, les chariots de l'art antérieur présentent des risques de transmissions de bactéries entrainant des risques d'infections nosocomiales, amplifiés par le fait que le chariot passe de patient en patient et présentent de nombreux recoins difficiles à nettoyer et à aseptiser.

En troisième lieu, les accessoires de chaque chariot sont spécifiques à un modèle de chariot et ne sont pas interchangeables. Cela oblige les hôpitaux à gérer un stock d'équipements difficilement évolutif.

### Solutions apportée par l'invention

La présente invention vise à apporter des solutions aux inconvénients que présentent les chariots de l'art antérieur.

A cet effet, l'invention concerne selon son acception la plus générale un chariot de soins médicalisé comprenant un châssis muni de roulettes, ainsi qu'au moins un tiroir et un équipement informatique alimenté par batteries rechargeables, caractérisé en ce que l'équipement informatique est intégré dans la partie supérieure du chariot fonctionne directement à une tension continue unique, et est dépourvu de ventilateur de refroidissement.

L'utilisation de cartes électroniques, d'écrans et d'équipements fonctionnant chacun sur une même et unique tension d'alimentation continue permet de réduire les pertes d'énergie se produisant dans les convertisseurs de tension.

Cette solution permet donc, avec des batteries données, d'augmenter l'autonomie du chariot mobile.

Par ailleurs, l'utilisation d'une carte électronique dépourvue de ventilateur de refroidissement permet non seulement de réduire la consommation mais encore d'éviter de brasser de l'air véhiculant des agents pathogènes.

Selon un mode de réalisation préféré, la partie supérieure du chariot, comprend un capot incliné intégrant un écran de visualisation et une carte électronique logée sous ledit capot, ladite carte électronique étant refroidie par la circulation d'air interne sans passage par des filtres.

L'absence de filtres d'air évite la stagnation de bactéries et autres agents pathogènes ou allergènes.

De préférence, le chariot mobile selon l'invention comporte un connecteur basse tension apte à coopérer avec une prise d'alimentation murale complémentaire.

Cette réalisation évite d'emporter sur le chariot mobile un bloc d'alimentation avec un transformateur, et permet donc de réduire le poids du chariot et de réduire les sources de pollution bactérienne et ainsi permet de ne pas avoir de courant alternatif secteur 220v sur le chariot mobile.

Selon un mode de réalisation avantageux, le chariot comporte des moyens d'alimentation par induction apte à coopérer avec des moyens fixes complémentaires évitant ainsi la présence d'une prise qui est qui constitue un nid de bactéries, poussières etc. et n'est pas facile à désinfecter.

Avantageusement, le chariot comporte des moyens de verrouillage magnétique du châssis sur une zone de réception, lesdits moyens de verrouillage étant constitués par un aimant permanent.

Le chariot ne nécessite aucune alimentation pour assurer le verrouillage, la consommation électrique intervenant uniquement lors du déverrouillage, par un organe comprenant un électroaimant produisant un champ magnétique contrariant temporairement les champs magnétiques de l'aimant magnétique.

Selon un mode de réalisation avantageux, le châssis est équipé de parois intérieures interchangeables présentant des glissières pour recevoir des accessoires de rangement.

Ces parois intérieures permettent d'adapter le chariot à tout type d'accessoires et notamment de tiroirs, et permet ainsi une grande modularité, ainsi que le réemploi d'accessoires et de tiroirs destinés à d'autres types de chariots.

De préférence, lesdites parois intérieures interchangeables présentent des entretoises latérales pour l'adaptation à des accessoires préexistants.

Avantageusement, le chariot selon l'invention comporte des moyens de verrouillage du chariot et sécurisation de tous les organes du chariot, informatiques et techniques, ainsi que de tous les tiroirs pour la sécurité du dossier patient, du médicament et tout le contenu du chariot.

Pour limiter les aspérités de surface, les recoins, les joints d'assemblage entre différentes parties du chariot, le châssis et les tiroirs, ainsi que les différentes parties du chariot sont réalisées en matière plastique moulée tandis que les panneaux sont réalisés en matière thermoplastique dure injectée.

Enfin et toujours pour limiter la formation des nids à bactéries difficiles à désinfecter tels que pas de vis, chaque roulette, comprend un galet dont l'axe de rotation est solidaire d'une fourche, ladite fourche étant solidaire d'une rotule, que ladite rotule est munie d'un écrou solidaire de la rotule, ledit écrou étant disposé à l'intérieur d'un logement conjugué à un logement ou projection de l'extrémité inférieure du châssis muni d'une tige filetée sur laquelle s'engage ledit écrou pour la fixation de la roulette.

### Description d'un exemple non limitatif de réalisation

La présente invention sera décrite dans ce qui suit en référence à un exemple non limitatif de réalisation, illustré par des dessins annexés où :
- la figure 1 représente une vue de trois quart face droite d'un chariot selon l'invention
- la figure 2 représente une vue de trois quart face gauche d'un chariot selon l'invention
- La figure 3 représente une vue du chariot en approche du connecteur mural
- La figure 4 représente une vue de dessus du chariot en phase de connexion
- La figure 5 représente une vue du châssis du chariot selon l'invention.
- La figure 6 montre en perspective une roulette selon l'invention.

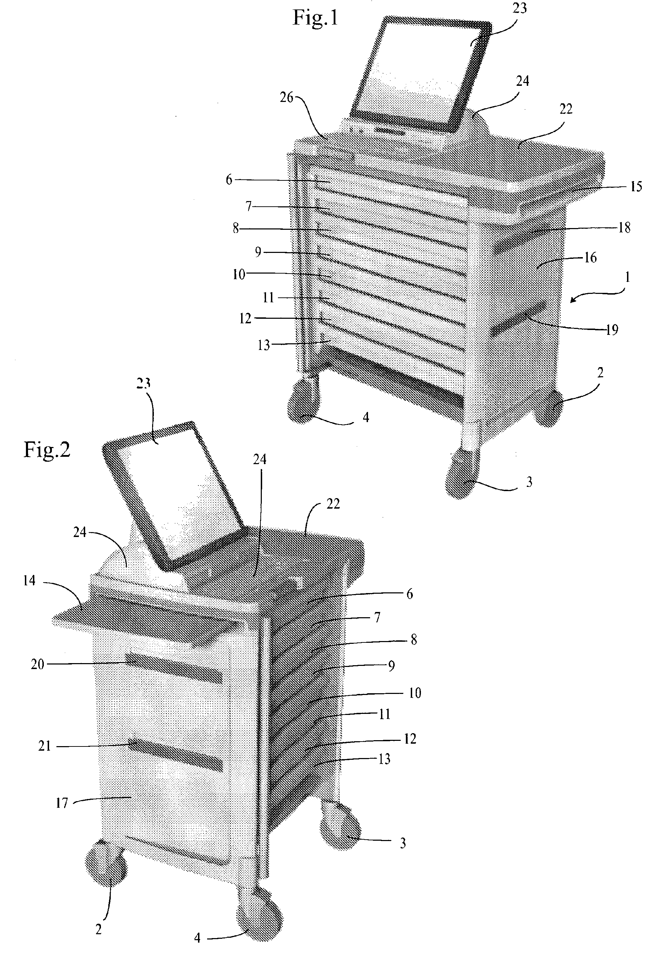

Les figures 1 et 2 représentent de vue de trois quart face d'un exemple de réalisation d'un chariot selon l'invention.

Le chariot comporte un corps (1) muni à sa partie inférieur de quatre roulettes orientables (2 à 5). Ce corps (1) reçoit des tiroirs (6 à 13) verrouillables. Il comprend également d'un coté au moins un plateau escamotable avec sortie de chaque côté (14, 15).

Le corps (1) est muni sur les flancs latéraux (16, 17) de géométrie intégrée et/ou de barres rapportées (18 à 21) destiné à l'accrochage d'accessoires tels que des paniers de rangement ou des poubelles.

Le plateau supérieur (22) déborde largement au-delà du flanc latéral (16), d'une longueur correspondant sensiblement à l'encombrement des accessoires destinés à être accrochés sur les nervures, afin de les protéger lors du passage dans une porte ou un espace restreint.

La partie supérieure est équipée d'un écran tactile de visualisation fixe (23) recouvert par une dalle de verre trempé, étanche, ainsi qu'un logement carrossé par un capot (24) pour recevoir les circuits électroniques. Le capot (24) présente des ouvertures pour le branchement de périphériques tels qu'une clé USB ou le passage d'un graveur lecteur de disque de type CD ou DVD. Un clavier étanche (26) est prévu sur le plateau supérieur (22).

L'écran (23) est désinfectable sur la zone de contact et le clavier (26) est étanche et immergeable pour la désinfection.

L'ensemble des circuits électroniques ainsi que les périphériques (écran tactile, lecteur de CD ou DVD, disque dur,...) fonctionnent à la même tension continue nominale, dans l'exemple décrit à 12 volts.

Le corps et les tiroirs, ainsi que les différentes parties du chariot sont réalisées en matière plastique moulée contenant des agents chimiques pour limiter la vitesse d'inflammabilité en conformité avec la norme satisfont à la norme UL94-VO. Ils sont conçus pour présenter moins de 10 % de zones recourbées dont le rayon de courbure est inférieur à trois millimètres. Les surfaces sont revêtues par une peinture médicale poudre époxy résistant aux chocs et rayures, appliquée en cabine de peinture poudre. Ainsi, d'une part, on élimine tout recoin susceptible de constituer un nid de bactéries et d'autre part on facilite le travail de désinfection en présentant une surface pratiquement lisse et sans recoins difficilement accessibles.

Le corps comporte optionnellement un tiroir pour dossier suspendu, pour permettre la transition du tout papier au tout informatique.

L'identification du personnel soignant est réalisé par un lecteur RFID ou équivalent (badge, code à barre et lecteur code à barre, CPS, ou login-mot de passe, ou biométrique) ; l'équipement comporte un lecteur de carte « personnel soignant » et/ou un lecteur de carte de santé patient.

Optionnellement, l'équipement comporte un négatoscope, par exemple sur la partie arrière de l'ecran.

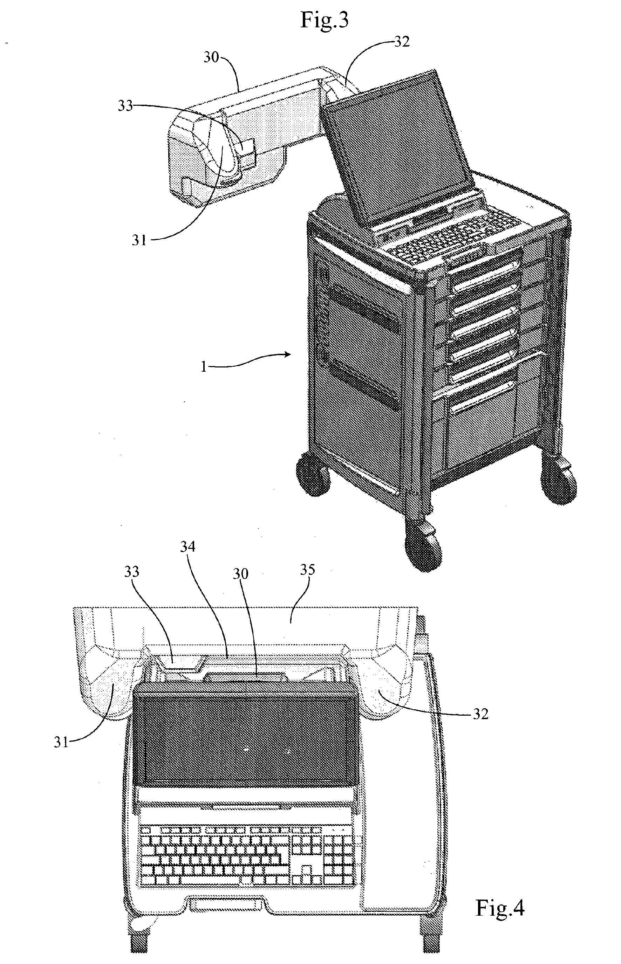

Les figures 3 et 4 représentent le chariot mobile et le connecteur mural (30). Le connecteur mural (30) est destiné à recevoir la partie supérieure du chariot (1), au niveau de la partie recevant les cartes électroniques. Cette disposition facilite le guidage visuel de l'enclenchement du chariot sur le connecteur (30).

Le connecteur présente deux ailes (31, 32) formant un cône de réception mécanique de la partie complémentaire du chariot. Le connecteur présente une prise (33) de forme tronconique à section rectangulaire, venant se loger dans une cavité de forme complémentaire prévue sur le chariot. La connexion électrique se fait par des broches en cuivre en basse tension continue. Alternativement si le chariot comporte des moyens d'alimentation par induction le connecteur (30) comprend des moyens fixes complémentaires pour charger les batteries sans connexion du type connecteur mâle et connecteur femelle.

Le verrouillage mécanique du chariot sur le connecteur mural (30) est assuré par liaison magnétique, grâce à un aimant permanent (35) prévu sur le socle mural et coopérant avec une partie métallique ou magnétique complémentaire (34) du chariot (30). Ce dernier comprend un électro-aimant produisant un champ contraire lorsqu'il est alimenté. L'alimentation se fait par un capteur manuel activable par le personnel manipulant le chariot, pour le libérer en vue de son utilisation.

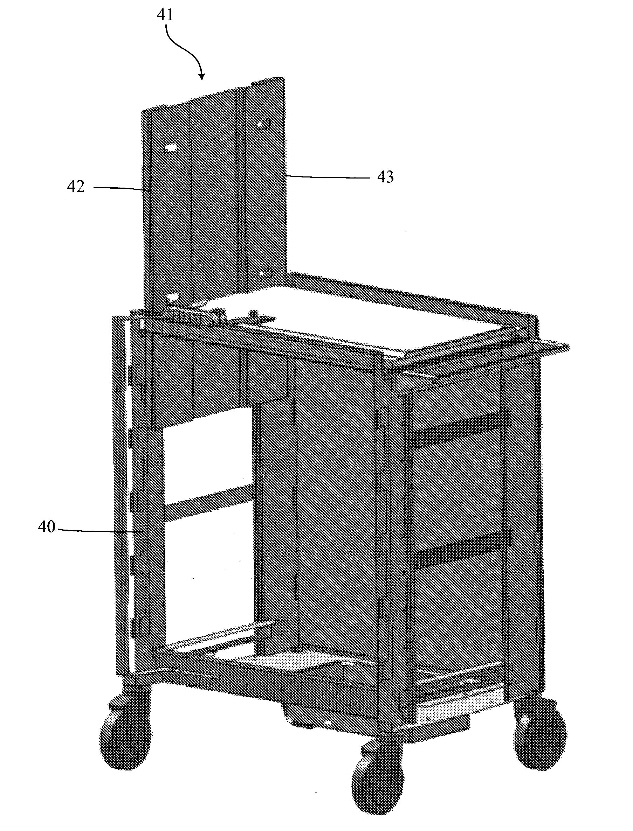

La figure 5 représente une vue du châssis du chariot (40). Il présente des glissières verticales pour recevoir des panneaux latéraux interchangeables (41). Ces panneaux (41) permettent d'adapter le chariot à n'importe quel type de tiroir, par des entretoises (42, 43) permettant d'ajuster la largeur en fonction des tiroirs existants destinés à équiper le chariot.

Ces panneaux interchangeables (41) sont avantageusement réalisés en matière thermoplastique dure injectée de type Ostaform (nom commercial).

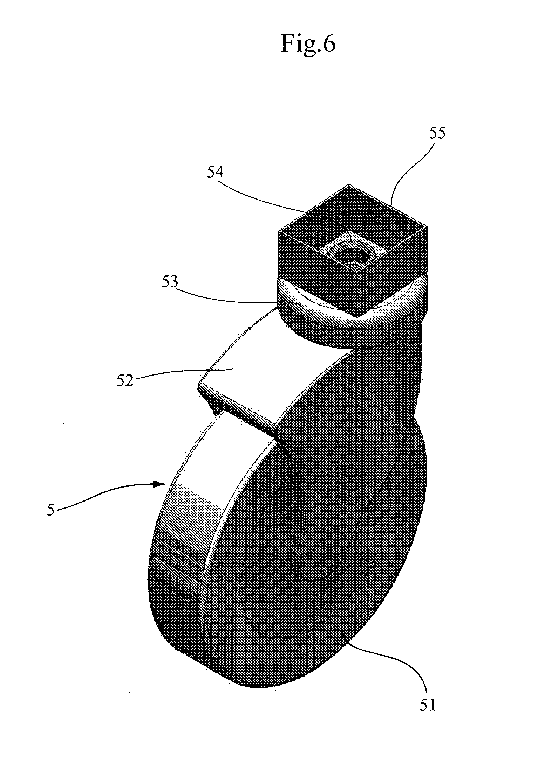

A la figure 6 nous avons présenté une roulette (5) permettant de limiter la création des nids à bactéries. Elle comprend un galet (51) dont l'axe de rotation est solidaire d'une fourche (52). La fourche (52) est solidaire d'une rotule (53), La rotule (53) est munie d'un écrou (54) solidaire de la rotule. L'écrou (54) est disposé à l'intérieur d'un logement (55) conjugué à un logement ou projection de l'extrémité inférieure du châssis. Ledit logement ou projection du châssis est muni d'une tige filetée (non représentée) sur laquelle s'engage l'écrou (54) pour la fixation de la roulette (5) au châssis. Les dimensions et forme du logement (55) permettent lors du vissage de l'écrou (54) sur la tige que le logement conjugué du châssis ou entoure la projection du châssis à frottement assurant ainsi un assemblage quasiment étanche aux bactéries.

Selon une variante de réalisation, le chariot comporte en outre un châssis formant un « diable », présentant un réceptacle pour recevoir un chariot mobile classique.

## Revendications

1. Chariot de soins médicalisé comprenant un châssis (40) muni de roulettes (2 à 5), ainsi qu'au moins un tiroir (6 à 13) et un équipement informatique alimenté par batteries rechargeables, l'équipement informatique étant intégré dans la partie supérieure du chariot et fonctionnant directement à une tension continue unique, **caractérisé par le fait que** l'équipement informatique est dépourvu de ventilateur de refroidissement et en ce que partie supérieure du chariot, comprend un capot incliné intégrant un écran de visualisation, une unité centrale informatique avec une carte électronique logée sous ledit capot, ladite carte électronique étant refroidie par la circulation d'air interne sans passage par des filtres.

2. Chariot de soins selon la revendication 1 , **caractérisé en ce qu'**il comporte un connecteur basse tension apte à coopérer avec une prise d'alimentation murale complémentaire.

3. Chariot de soins selon la revendication 1, **caractérisé en ce qu'**il comporte des moyens d'alimentation par induction apte à coopérer avec des moyens fixes complémentaires.

4. Chariot de soins selon l'une des revendications 1 à 3, **caractérisé en ce qu'**il comporte des moyens de verrouillage magnétique du châssis sur une zone de réception, lesdits moyens de verrouillage étant constitués par un aimant permanent.

5. Chariot de soins selon l'une des revendications 1 à 4, **caractérisé en ce que** le châssis est équipé de parois intérieures interchangeables présentant des glissières pour recevoir des accessoires de rangement.

6. Chariot de soins selon la revendication 5, **caractérisé en ce que** lesdites parois intérieures interchangeables présentent des entretoises latérales pour l'adaptation à des accessoires préexistants.

7. Chariot de soins selon l'une des revendications 1 à 6, **caractérisé en ce qu'**il comporte des moyens de verrouillage du chariot et sécurisation de tous les organes du chariot, informatiques et techniques, ainsi que de tous les tiroirs pour la sécurité du dossier patient, du médicament et tout le contenu du chariot.

8. Chariot de soins selon l'une des revendications 1 à 7, **caractérisé par** le fait le châssis et les tiroirs, ainsi que les différentes parties du chariot sont réalisées en matière plastique moulée tandis que les panneaux sont réalisés en matière thermoplastique dure injectée.

9. Chariot selon l'une des revendications 1 à 7, **caractérisé par le fait que** chaque roulette (2 à 5), comprend un galet (51) dont l'axe de rotation est solidaire d'une fourche (52), ladite fourche étant solidaire d'une rotule (53), que ladite rotule (53) est munie d'un écrou (54) solidaire de la rotule, ledit écrou (54) étant disposé à l'intérieur d'un logement (55) conjugué à un logement ou projection de l'extrémité inférieure du châssis muni d'une tige filetée sur laquelle s'engage ledit écrou (54) pour la fixation de la roulette.

## Claims

1. A medical care trolley comprising a frame (40) furnished with castors (2 to 5) and at least one drawer (6 to 13) and an item of computer equipment powered by rechargeable batteries, the computer equipment being incorporated into the top portion of the trolley and operating directly at a single direct-current voltage, **characterized in that** the computer equipment has no cooling fan and **in that** the top portion of the trolley comprises an inclined cover incorporating a display screen, a central processing unit with an electronic circuit board housed under said cover, said electronic circuit board being cooled by the flow of internal air without passing through filters.

2. The care trolley as claimed in claim 1, **characterized in that** it comprises a low-voltage connector capable of interacting with a matching wall power socket.

3. The care trolley as claimed in claim 1, **characterized in that** it comprises means for powering by induction capable of interacting with matching fixed means.

4. The care trolley as claimed in one of claims 1 to 3, **characterized in that** it comprises means for magnetic locking of the frame onto a receiving zone, said locking means consisting of a permanent magnet.

5. The care trolley as claimed in one of claims 1 to 4, **characterized in that** the frame is fitted with interchangeable internal walls having runners for receiving storage accessories.

6. The care trolley as claimed in claim 5, **characterized in that** said interchangeable internal walls have lateral spacers for adaptation to preexisting accessories.

7. The care trolley as claimed in one of claims 1 to 6, **characterized in that** it comprises means for locking the trolley and securing all the computer and technical members of the trolley and all the drawers for the security of the patient file, of the medication and the whole content of the trolley.

8. The care trolley as claimed in one of claims 1 to 7, **characterized in that** the frame and the drawers, and the various portions of the trolley, are made of molded plastic while the panels are made of injected hard thermoplastic.

9. The trolley as claimed in one of claims 1 to 7, **characterized in that** each castor (2 to 5) comprises a roller (51) the rotation axis of which is secured to a fork (52), said fork being secured to a swivel joint (53), **in that** said swivel joint (53) is furnished with a nut (54) secured to the swivel joint, said nut (54) being placed inside a housing (55) paired with a housing or projection of the bottom end of the frame furnished with a threaded rod onto which said nut (54) is engaged for the attachment of the castor.

## Patentansprüche

1. Wagen für medizinische Versorgung, umfassend ein Gestell (40), das mit kleinen Rädern (2 bis 5) versehen ist, sowie mindestens eine Schublade (6 bis 13) und eine durch wiederaufladbare Batterien gespeiste Datenverarbeitungseinrichtung, wobei die Datenverarbeitungseinrichtung in dem oberen Teil des Wagens integriert ist und direkt mit einer einzigen Gleichspannung betrieben wird, **dadurch gekennzeichnet, dass** die Datenverarbeitungseinrichtung kein Kühlgebläse aufweist und dass der obere Teil des Wagens eine geneigte Abdeckung umfasst, in der ein Bildschirm und eine Zentraldatenverarbeitungseinheit mit einer elektronischen Karte, die unter der Abdeckung aufgenommen ist, integriert ist, wobei die elektronische Karte durch innere Luftzirkulation ohne Durchströmen von Filtern gekühlt wird.

2. Wagen für medizinische Versorgung nach Anspruch 1, **dadurch gekennzeichnet, dass** er einen Niederspannungsstecker aufweist, der mit einer komplementären Wandsteckdose zusammenwirken kann.

3. Wagen für medizinische Versorgung nach Anspruch 1, **dadurch gekennzeichnet, dass** er Mittel zur induktiven Versorgung aufweist, die mit feststehenden komplementären Mitteln zusammenwirken können.

4. Wagen für medizinische Versorgung nach einem der Ansprüche 1 bis 3, **dadurch gekennzeichnet, dass** er Mittel zur magnetischen Verriegelung des Gestells an einer Aufnahmezone aufweist, wobei die Verriegelungsmittel durch einen Permanentmagneten gebildet werden.

5. Wagen für medizinische Versorgung nach einem der Ansprüche 1 bis 4, **dadurch gekennzeichnet, dass** das Gestell mit austauschbaren Innenwänden versehen ist, die Schienen zur Aufnahme von Verstauzubehör aufweisen.

6. Wagen für medizinische Versorgung nach Anspruch 5, **dadurch gekennzeichnet, dass** die austauschbaren Innenwände Querstege zur Anpassung an bereits bestehendes Zubehör aufweisen.

7. Wagen für medizinische Versorgung nach einem der Ansprüche 1 bis 6, **dadurch gekennzeichnet, dass** er Mittel zur Verriegelung des Wagens und zur Sicherung aller technischen und Datenverarbeitungs-Glieder des Wagens sowie aller Schubladen zur Sicherung der Patientenakte, von Arzneimitteln und allen Inhalts des Wagens aufweist.

8. Wagen für medizinische Versorgung nach einem der Ansprüche 1 bis 7, **dadurch gekennzeichnet, dass** das Gestell und die Schubladen sowie die verschiedenen Teile des Wagens aus geformtem Kunststoffmaterial hergestellt sind und die Platten aus gespritztem hartem Thermoplast hergestellt sind.

9. Wagen nach einem der Ansprüche 1 bis 7, **dadurch gekennzeichnet, dass** jedes kleine Rad (2 bis 5) eine Laufrolle (51) umfasst, deren Drehachse fest mit einem Joch (52) verbunden ist, wobei das Joch fest mit einem Kugelgelenk (53) verbunden ist, das Kugelgelenk (53) mit einer Mutter (54) versehen ist, die fest mit dem Kugelgelenk verbunden ist, wobei die Mutter (54) im Inneren einer Aufnahme (55) angeordnet ist, die mit einer Aufnahme oder einem Vorsprung des unteren Endes des Gestells zusammenwirkt, die bzw. der mit einer Gewindestange versehen ist, auf der die Mutter (54) zur Befestigung des kleinen Rads in Eingriff steht.
